# EUROPÄISCHE PATENTSCHRIFT

(11) **EP 0 561 198 B1**
(45) Veröffentlichungstag und Bekanntmachung des Hinweises auf die Patenterteilung: **25.09.1996**
(21) Anmeldenummer: 93103180.1
(22) Anmeldetag: 27.02.1993
(51) Int. Cl.: B65G 15/12, B65G 39/04, B65G 23/04, B65G 21/20

(54) **Gurtförderer**
Belt conveyor
Transporteur à courroie

(30) Priorität: 14.03.1992 DE 4208230
(43) Veröffentlichungstag der Anmeldung: 22.09.1993
(73) Patentinhaber: KRUPP INDUSTRIETECHNIK GMBH, 47226 Duisburg (DE)
(72) Erfinder: Frenzel, Jörg, Dipl.-Ing., W-3012 Langenhagen (DE); Zeddies, Hubertus, Dr.-Ing., W-3000 Hannover 1 (DE); Kullmann, Friedemann, Dipl.-Ing., W-3000 Hannover 51 (DE); Pohl, Erhard, Ing. (grad.), W-3053 Hohnhorst (DE); Gaun, Viktor, Dipl.-Ing., W-3014 Laatzen (DE); Maschmeier, Horst, Dipl.-Ing., W-4986 Rödinghausen 1 (DE)

(56) Entgegenhaltungen:
- DE-A- 2 301 850
- DE-A- 2 323 389
- DE-A- 2 855 204
- US-A- 4 883 159

## Beschreibung

Die Erfindung bezieht sich auf einen Gurtförderer zum Transport von Paletten o. dgl. Stückgut mit einem oder mehreren je aus einem endlosen Gurt gebildeten zueinander parallelen Gurtsträngen, an deren Enden der Gurt über auf einer je Gurtförderende gemeinsamen Welle angeordnete Antriebs- und/oder Umlenkrollen läuft.

Derartige Gurtförderer sind in verschiedenen Ausführungen bekannt und werden wegen ihrer Vorteile beispielsweise gegenüber Palettenfördersystemen mit reihenweise in relativ kurzen Abständen hintereinander eingebauten Rollen mit quer zur Förderrichtung liegenden Achsen eingesetzt. Bei einer Bandförderanlage nach der DE-A-2301850 ist eine durch alle Bänder hindurchgeführte abnehmbare Welle mit einem an einem Ende über ein Kugellager in ein Gestell einschraubbaren Lagerhalter in einer Anordnung vorgesehen, die einen Bandwechsel besonders erschwert. Die bekannten Gurtförderer weisen sämtlich den Nachteil auf, daß sie nur verhältnismäßig aufwendig zu warten sind und der Ausbau und Austausch der das Transportgut tragenden und dem Verschleiß ausgesetzten Gurte, insbesondere bei einer Ausführung mit drei oder mehr Strängen, umständlich ist und einen hohen Zeit- und Arbeitseinsatz erfordert. Es ist Aufgabe der vorliegenden Erfindung, diese Nachteile zu vermeiden und einen Gurtförderer zu schaffen, bei dem die Gurte einfach und bequem auszutauschen sind und der sich leicht und wirtschaftlich als Bestandteil einer mehrteiligen Gurtförderanlage verwenden läßt.

Danach wird bei einem Gurtförderer der eingangs angegebenen Art vorgeschlagen, daß das Obertrum des Gurtes auf einem zu einer Seite des Gurtförderers offenen Trägerprofil ausschließlich gleitend geführt ist und daß die Rollen als Lager ausgeführt sind, dessen Lagerträger am Trägerprofil befestigt und von der Welle frei dreh- und verschiebbar durchsetzt ist und dessen den Gurt tragendes Lagergehäuse über eine Spannverbindung mit der Welle lösbar verbunden ist. Dadurch läßt sich lediglich durch Öffnen der Spannverbindungen allein die Welle von den Rollen lösen und ohne weiteres axial so weit verschieben, daß auch von zwischen den äußeren Gurtsträngen liegenden Gurtsträngen die Gurte abzunehmen und auszutauschen sind. Nach dem Austausch genügt das Zurückschieben der Welle und das Anziehen der Spannverbindung, um den Gurtförderer wieder betriebsbereit zu machen. Die Führung nur des Obertrums des Gurtes auf dem Trägerprofil und hier die Ausführung als Gleitführung gewährleistet eine bequeme Wartung und einen geräuscharmen und störungssicheren Betrieb.

Für die Spannverbindung empfiehlt sich, daß sie mit einem Spannkonus ausgeführt ist, der über einen Keilring zwischen ihm und dem Lagergehäuse auf der Welle verspannbar ist. Diese Ausführung benötigt nur wenige Teile, ist konstruktiv übersichtlich und sorgt im Spannzustand für eine zuverlässige Übertragung des Drehmoments von der Welle auf die Rolle, ohne daß diese jeweils wieder neu eingerichtet werden muß.

Zusätzlich ist der Gurtförderer je Gurt mit einer am betreffenden Trägerprofil abgestützten, an einer Umlenkrolle angelenkten Gurtspannvorrichtung versehen. Diese dient der einmaligen Einstellung der Gurtspannung bei der Inbetriebnahme des Gurtförderers und der gelegentlichen Nachspannung bei einer Änderung der Betriebsgegebenheiten, wie einer Längung des Gurtes oder einer Änderung des Transportgutgewichtes, bezogen auf eine bestimmte Gurtlänge.

Weiter ist es vorteilhaft, wenn der Antrieb der Antriebsrollen einer Welle gemeinsam über die Welle von einem unterhalb auf einer gleichzeitig die Trägerprofile abstützenden Konsolanordnung befestigten Antriebsmotor erfolgt. Die Anordnung ist übersichtlich, platzsparend und leicht zugänglich.

Außerdem ist die Konsolanordnung gegenüber der Flurfläche wie dem Hallenboden höhenverstellbar. Auf diese Weise wird eine einfache Einstellung der Höhenlage und die Ausrichtung in der Waagerechten für den Gurtförderer ermöglicht.

In weiterer Ausgestaltung der Erfindung wird vorgeschlagen, daß der Gurtförderer als Baukastenelement zur Verwendung in einer mehrteiligen geradlinigen oder abgewinkelten Gurtfördereranlage ausgebildet ist. Damit sind neben der Höheneinstellbarkeit auch die übrigen Eigenschaften auf die Mehrteiligkeit einer Gurtfördereranlage und die Austauschbarkeit ihrer Elemente oder Teilelemente abgestimmt.

Zur Anpassung an diese Mehrteiligkeit ist der Gurtförderer im Übergangsbereich zwischen Teilen einer Gurtfördereranlage mit Stützrollen kleineren Durchmessers als des der Rollen versehen. Infolge dieser Stützrollen kann der Durchmesser der Antriebs- und der Umlenkrollen praktisch beliebig groß gewählt, jedenfalls aber unbehindert den übrigen Konstruktionsanforderungen angepaßt werden.

Im übrigen ist der Gurtförderer als Eckumsetzer mit zwei in einer Richtung verlaufenden äußeren Gurtsträngen und zwei oder drei zwischen diesen und quer dazu verlaufenden inneren Gurtsträngen alternativ zur Gestaltung für den Einrichtungstransport ausgeführt. Dadurch können unter Beibehaltung der Übereinstimmung und Austauschbarkeit von Teilelementen beliebige Transportrichtungskombinationen innerhalb einer Gurtfördereranlage verwirklicht werden.

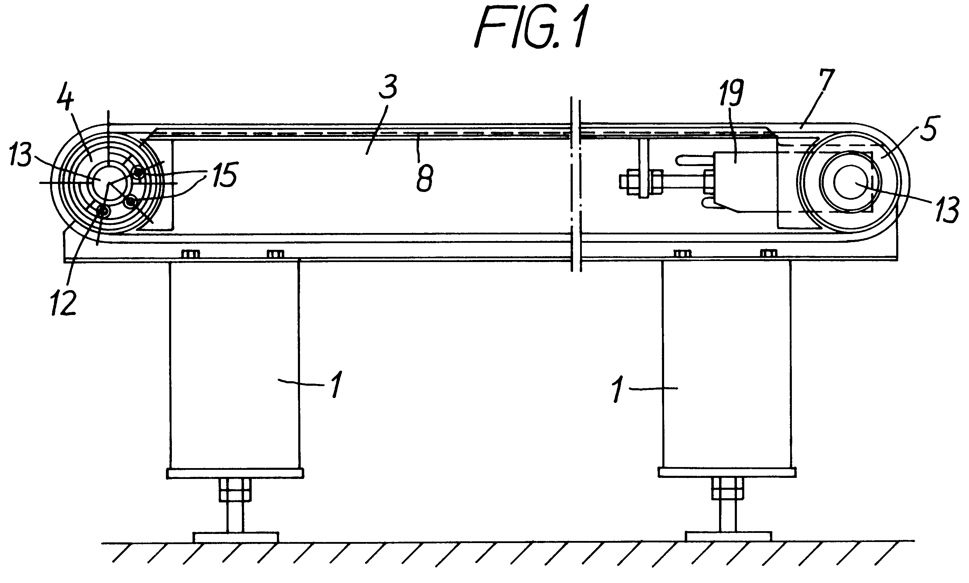

In der Zeichnung sind Ausführungsbeispiele eines erfindungsgemäßen Gurtförderers dargestellt, und zwar in
- Fig. 1: in Seitenansicht, in

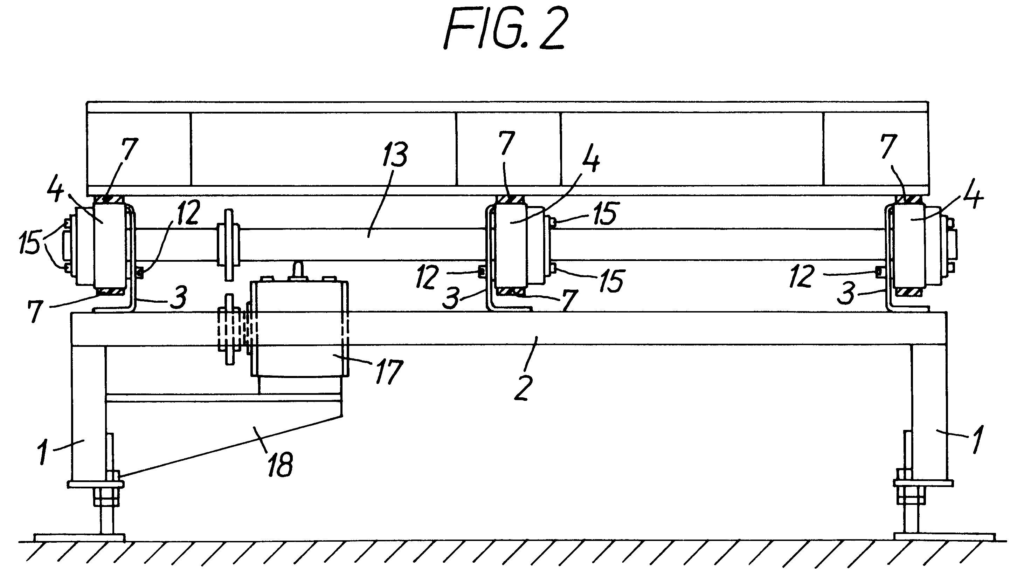

- Fig. 2: in Stirnansicht, in

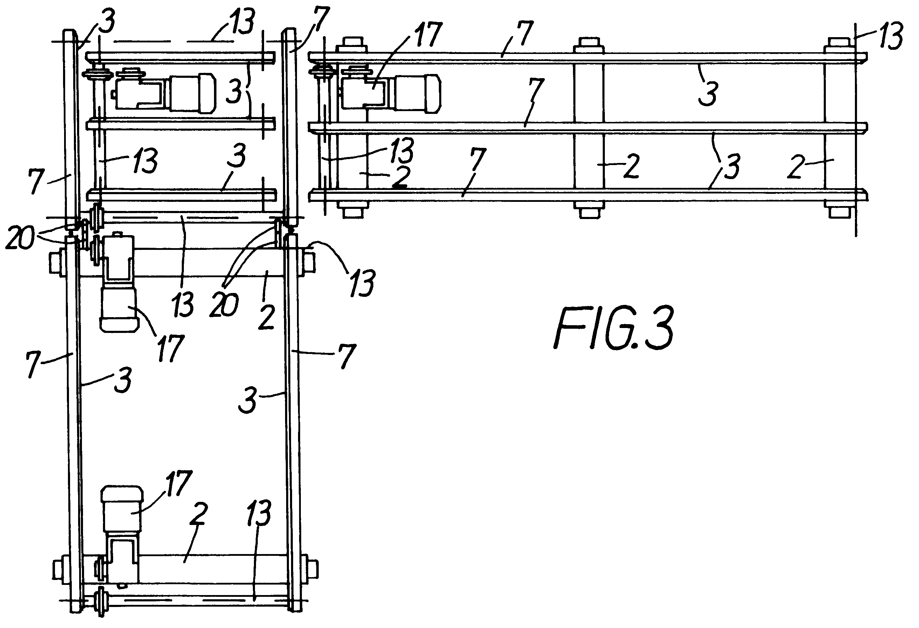

- Fig. 3: in Draufsicht auf eine Gurtfördereranlage mit mehreren Gurtförderern und in

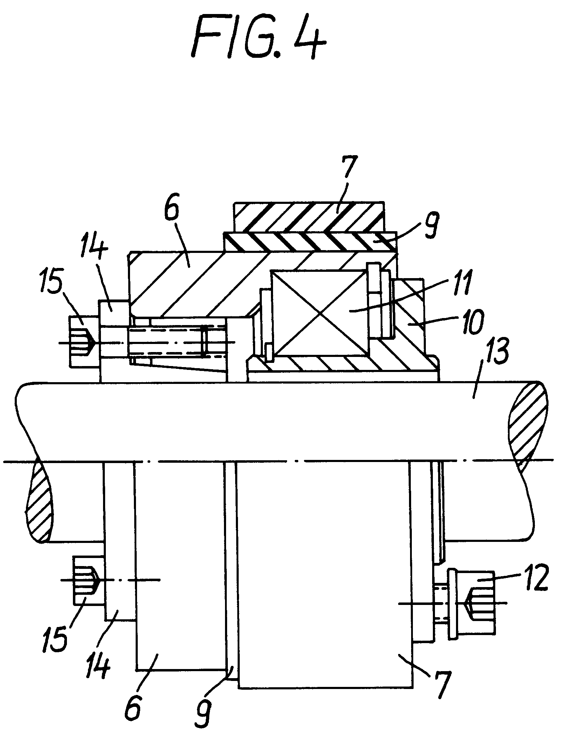

- Fig. 4: im Teilquerschnitt durch eine Rollenausführung.

Auf höhenverstellbaren Stützfüßen 1 ruht eine aus Traversen 2 gebildete Konsolanordnung, die je Gurtstrang ein winkelförmiges, in Förderrichtung verlaufendes Trägerprofil 3 aufnimmt. An einem Gurtstrangende ist eine Antriebsrolle 4, an dem anderen Ende eine Umlenkrolle 5 angeordnet. Auf einem drehbaren Lagergehäuse 6 der Rollen liegt der jeweils einen Gurtstrang bildende Gurt 7 auf, dessen Obertrum zwischen den Rollen 4, 5 auf einer Tragfläche 8 des Trägerprofils 3 gleitend geführt ist. Der Gurt 7 ist hierzu mit einer besonderen Gleitbeschichtung 9 versehen.

Das Lagergehäuse 6 nimmt den auf einem Lagerträger 10 liegenden Lagerkörper 11 auf. Der Lagerträger 10 ist mit einer Schraube 12 am Trägerprofil 3 befestigt. Eine für alle Rollen eines Gurtfördererendes gemeinsame Welle 13 durchsetzt lose den Lagerträger 11. Zur lösbaren Verbindung der Rollen mit der Welle 13 ist auf dieser jeweils ein Spannkonus 14 angeordnet, der mittels Spannschrauben 15 über einen Keilring 16 eine drehfeste, leicht lösbare Verbindung zum Lagergehäuse 6 herstellt.

Der Antrieb der Welle 13, die Antriebsrollen 4 trägt, erfolgt von einem Antriebsmotor 17 auf einer Konsole 18 an einem der Stützfüße 1. Die Umlenkrollen 5 sind jeweils an einer Gurtspannvorrichtung 19 angelenkt, welche sich am Trägerprofil 3 abstützt. Im Übergangsbereich von einem zum nächsten Gurtförderer einer mehrteiligen Gurtfördereranlage sind Stützrollen 20 mit kleinem Durchmesser für die unbehinderte Überleitung des Transportgutes vorgesehen. Für das Auswechseln des mittleren Gurtes 7 bei dreisträngigen Gurtförderern wird der Spannkonus 14 aller Rollen 4, 5 gelöst und werden die Wellen 13 so weit axial verschoben, daß sich der Gurt 7 leicht abnehmen läßt.

## Patentansprüche

1. Gurtförderer zum Transport von Paletten o. dgl. Stückgut mit einem oder mehreren je aus einem endlosen Gurt (7) gebildeten zueinander parallelen Gurtsträngen, an deren Enden der Gurt (7) über auf einer je Gurtförderende gemeinsamen Welle (13) angeordnete Antriebs- und/oder Umlenkrollen (4, 5) läuft, dadurch gekennzeichnet, daß das Obertrum des Gurtes (7) auf einem zu einer Seite des Gurtförderers offenen Trägerprofil (3) ausschließlich gleitend geführt ist und daß die Rollen (4, 5) als Lager ausgeführt sind, dessen Lagerträger (10) am Trägerprofil (3) befestigt und von der Welle (13) frei dreh- und verschiebbar durchsetzt ist und dessen den Gurt (7) tragendes Lagergehäuse (6) über eine Spannverbindung mit der Welle (13) lösbar verbunden ist.

2. Gurtförderer nach Anspruch 1, dadurch gekennzeichnet, daß die Spannverbindung mit einem Spannkonus (14) ausgeführt ist, der über einen Keilring (16) zwischen ihm und dem Lagergehäuse (6) auf der Welle (13) verspannbar ist.

3. Gurtförderer nach Anspruch 1 oder 2, dadurch gekennzeichnet, daß er je Gurt (7) mit einer am betreffenden Trägerprofil (3) abgestützten, an einer Umlenkrolle (5) angelenkten Gurtspannvorrichtung (19) versehen ist.

4. Gurtförderer nach Anspruch 1, 2 oder 3, dadurch gekennzeichnet, daß der Antrieb der Antriebsrollen (4) einer Welle (13) gemeinsam über die Welle (13) von einem unterhalb auf einer gleichzeitig die Trägerprofile (3) abstützenden Konsolanordnung (1, 2, 18) befestigten Antriebsmotor (17) erfolgt.

5. Gurtförderer nach Anspruch 4, dadurch gekennzeichnet, daß die Konsolanordnung (1, 2, 18) gegenüber der Flurfläche wie dem Hallenboden höhenverstellbar ist.

6. Gurtförderer nach einem der vorhergehenden Ansprüche, dadurch gekennzeichnet, daß er als Baukastenelement zur Verwendung in einer mehrteiligen geradlinigen oder abgewinkelten Gurtfördereranlage ausgebildet ist.

7. Gurtförderer nach Anspruch 6, dadurch gekennzeichnet, daß er im Übergangsbereich zwischen Teilen einer Gurtfördereranlage mit Stützrollen (20) kleineren Durchmessers als des der Rollen versehen ist.

8. Gurtförderer nach einem der vorhergehenden Ansprüche, dadurch gekennzeichnet, daß er als Eckumsetzer mit zwei in einer Richtung verlaufenden äußeren Gurtsträngen und zwei oder drei zwischen diesen und quer dazu verlaufenden inneren Gurtsträngen ausgeführt ist.

## Claims

1. Belt conveyor for the transport of pallets or similar unit loads with one or several parallel belt strands, which are each formed from a continuous belt (7) and at the ends of which the belt (7) runs over driving and/or return rollers (4, 5) arranged on a shaft (13) common to each belt transport end, characterised in that the top run of the belt (7) is guided solely for sliding movement on a support profile (3) open to one side of the belt conveyor, and that the rollers (4, 5) are constructed as a bearing, its bearing support (10) being fastened to the support profile (3) and having the shaft (13) passing through it so as to be freely rotatable and displaceable, and its bearing casing (6) supporting the belt (7) being detachably connected to the shaft (13) via a clamp connection.

2. Belt conveyor according to Claim 1, characterised in that the clamp connection is carried out with a clamping cone (14) which may be clamped on the shaft (13) via a conical ring (16) between said cone and the bearing casing (6).

3. Belt conveyor according to Claim 1 or 2, characterised in that it is provided with a belt tensioning device (19) for each belt (7) which is supported on the respective support profile (3) and is pivoted to a return roller (5).

4. Belt conveyor according to Claim 1, 2 or 3, characterised in that the driving rollers (4) of a shaft (13) are driven jointly via the shaft (13) by a drive motor (17) fastened underneath on a bracket arrangement (1, 2, 18) at the same time supporting the support profile (3).

5. Belt conveyor according to Claim 4, characterised in that the bracket arrangement (1, 2, 18) is vertically adjustable relative both to the floor surface and to the hall floor.

6. Belt conveyor according to one of the preceding claims, characterised in that it is constructed as a modular system element for use in a multiple-part rectilinear or angled belt conveyor system.

7. Belt conveyor according to Claim 6, characterised in that in the transition area between parts of a belt conveyor system, it is provided with support rollers (20) of smaller diameter than that of the rollers.

8. Belt conveyor according to one of the preceding claims, characterised in that it is constructed as a corner transfer unit with two outer belt strands running in one direction and two or three inner belt strands running between these and transversely thereto.

## Revendications

1. Transporteur à courroie, pour le transport de palettes ou d'un produit similaire disposé en paquets, comportant une ou plusieurs lignes de couloir parallèles les unes aux autres, constituées chacune d'une courroie sans fin (7), et aux extrémités desquelles la courroie (7) circule sur des rouleaux d'entraînement et/ou de renvoi (4, 5) disposés, à chaque extrémité du transporteur à courroie, sur un arbre commun,
caractérisé en ce que le brin supérieur de la courroie (7) est guidé exclusivement en glissant sur une poutre profilée (3) ouverte sur un côté du transporteur à courroie, et en ce que les rouleaux (4, 5) sont réalisés sous la forme de paliers d'appui dont le support de palier (10) est fixé sur la poutre profilée (3) et est traversé par l'arbre (13) pouvant tourner et coulisser librement, et dont le carter de palier (6) portant la courroie (7) est relié de façon démontable à l'arbre (13) par l'intermédiaire d'une fixation à serrage.

2. Transporteur à courroie suivant la revendication 1, caractérisé en ce que la fixation à serrage est réalisée avec un cône de serrage (14) qui peut être serré sur l'arbre (13) au moyen d'une bague conique (16) entre lui et le carter de palier.

3. Transporteur à courroie suivant la revendication 1 ou la revendication 2, caractérisé en ce qu'il est équipé, pour chaque courroie (7), d'un dispositif de tension de la courroie (19) prenant appui sur la poutre profilée (3) et s'articulant sur une poulie de renvoi (5).

4. Transporteur à courroie suivant la revendication 1, la revendication 2, ou la revendication 3, caractérisé en ce que l'entraînement des rouleaux d'entraînement (4) d'un arbre (13) se fait ensemble par l'arbre (13), par un moteur d'entraînement (17) fixé, par dessous, à un dispositif formant console (1, 2, 18) et donnant, en même temps, appui à la poutre profilée (3).

5. Transporteur à courroie suivant la revendication 4, caractérisé en ce que le dispositif formant console (1, 2, 18) est réglable en hauteur par rapport à la surface de plancher, comme le sol de l'atelier.

6. Transporteur à courroie suivant l'une des revendications précédentes, caractérisé en ce qu'il est réalisé sous la forme d'élément de boite de construction destiné à être utilisé dans une installation de transporteurs à courroie en plusieurs parties, en ligne droite ou en formant des angles.

7. Transporteur à courroie suivant la revendication 6, caractérisé en ce que, dans la zone de transition entre des parties d'une installation de transporteurs à courroie, il est équipé de rouleaux d'appui (20), de diamètre plus petit que celui des rouleaux.

8. Transporteur à courroie suivant l'une des revendications précédentes, caractérisé en ce qu'il est réalisé sous la forme d'un transporteur d'angle, en comportant deux lignes de courroies extérieures circulant dans une direction et' deux ou trois lignes de courroies intérieures circulant entre celles-ci et transversalement à elles.
